# EUROPEAN PATENT APPLICATION

(11) **EP 2 421 199 A1**
(43) Date of publication of application: **22.02.2012**
(21) Application number: 11006865.7
(22) Date of filing: 22.08.2011
(51) Int. Cl.: H04L 12/24, G06Q 10/00, H04W 99/00, H04L 29/08

(54) **Method for transforming a workflow into a management object tree**

(30) Priority: 22.08.2010 US 375862
(71) Applicant: HTC Corporation, Taoyuan County 330 (TW)
(72) Inventor: Yu, Chun-Ta, 80538 München (DE); Tseng, Yin-Yeh, 80538 München (DE)
(74) Representative: Ljungberg, Robert

(57) **Abstract**

A method of transforming a workflow into a management object tree for a server and a client of a service system is disclosed. The method comprises transforming a first step of the workflow into a first step subtree of the management object tree, for the client to execute the workflow according to the management object tree.

## Description

### Cross Reference To Related Applications

This application claims the benefit of U.S. Provisional Application No. 61/375,862, filed on Aug. 22, 2010 and entitled "Method for transforming a workflow into a management object", the contents of which are incorporated herein in their entirety.

### Background of the Invention

### 1. Field of the Invention

The present invention relates to a method used in a service system and related communication device, and more particularly, to a method of transforming a workflow into a management object tree for a service system and related communication device.

### 2. Description of the Prior Art

The Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

In OMA Device Management (DM) requirement, a Management Authority (MA) is defined as an authorized legal entity which can manage one or more DM clients (e.g. mobile devices) by using a DM protocol conforming to the OMA specifications. Furthermore, according to deployment of a system supporting the OMA, the MA may directly manage the DM client, or the MA may manage the DM client via one or multiple DM servers, i.e., the DM client is actually managed by the one or the multiple DM servers. In detail, the DM protocol defines a way according to which a packet or a message is exchanged between the DM server and the DM client. The DM protocol also defines a way according to which the DM client can feedback a command, a status or a report to the DM server. Further, when using the DM protocol, the DM server manages the DM client through a set of management objects in the DM client. A management object may be small as an integer or large as a picture. Besides, the management object may conform to the DM protocol such as a Software Component Management Object (SCOMO), a Software and Application Control Management Object (SACMO) or a Firmware Update Management Object (FUMO).

In general, a workflow for the DM includes multiple DM operations, and is executed by a DM client for a certain purpose. Originally, it is inefficient for a DM server to control the DM client to execute the DM operations (e.g. conditionally) of the workflow (e. g. a script) . Further, a DM operation may be an operation, a process, a command or an action of other type on management objects. The DM Server has to send a DM command to a DM client for indicating a DM operation of the workflow to be executed. The DM client feeds back a result of the DM operation to the DM server, and the DM server can send another DM command to the DM client for a next operation of the workflow. Before the workflow is completed, a large amount of transmissions between the DM client and the DM server are exchanged which makes executing the workflow inefficient and time consuming.

To address this issue, the SACMO is proposed to reduce an amount of transmissions between the DM client and the DM server. The SACMO aims to enable remote operations for software and application control in the DM client. The SACMO will provide the DM client capabilities of processing management actions such as a workflow or on device management of software and applications utilizing existing management objects. Further, a management object tree defined according to the SACMO will be used for setting up parameters and operational functions necessary for executing the workflow without indications from the DM server. Therefore, after finishing a step, the DM client can determine a next step according to a condition. In other words, the DM server sends the management object tree to the DM client for setting up the workflow. Then, the DM client executes the workflow according to the management object tree until the workflow is completed or an error occurs. However, it is still unknown how to transform the workflow into the management object tree properly and efficiently such that the DM client can execute the workflow correctly after receiving the management object tree.

### Summary of the Invention

The disclosure therefore provides a method transforming a workflow into a management object tree to solve the abovementioned problems.

A method of transforming a workflow into a management object tree for a server and a client of a service system is disclosed. The method comprises transforming a first step of the workflow into a first step subtree of the management object tree, for the client to execute the workflow according to the management object tree.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary service system according to the present disclosure.

Fig. 2 is a schematic diagram of an exemplary communication device according to the present disclosure.

Fig. 3 is a flowchart of an exemplary process according to the present disclosure.

Fig. 4 is a schematic diagram of a workflow according to the present invention.

Fig. 5 is a schematic diagram of a management object tree according to the present invention.

Fig. 6 is a schematic diagram of an operation subtree of a step subtree according to the present invention.

### Detailed Description

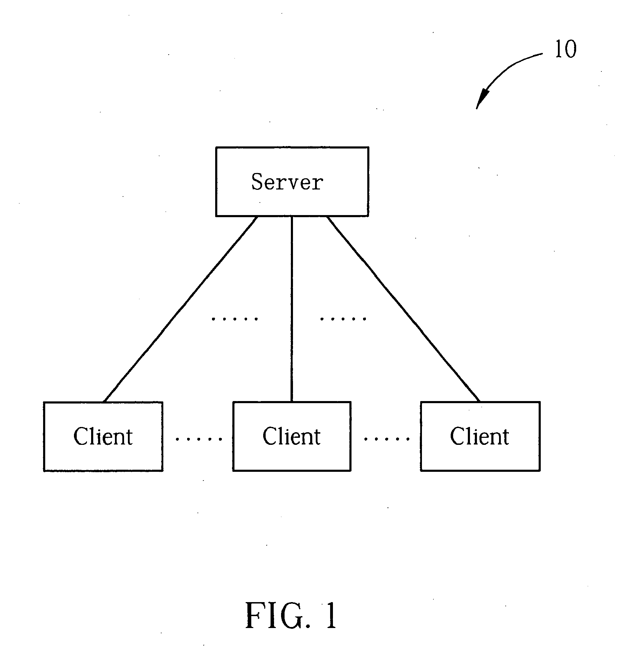

Please refer to Fig. 1, which is a schematic diagram of a service system 10 according to an example of the present disclosure. The service system 10 supports an Open Mobile Alliance (OMA) Device Management (DM) protocol and is briefly composed of a server and a plurality of DM clients (hereafter clients for short). Further, the server and the plurality of DM clients conform to the Software and Application Control Management Object (SACMO). Therefore, when the server requires a client to execute a workflow comprising a plurality of steps (e.g. processes or commands), the server transforms the workflow into a management object tree, and transmits the management object tree to the client. After the client receives the management object tree, the client executes the workflow according to the management object tree.

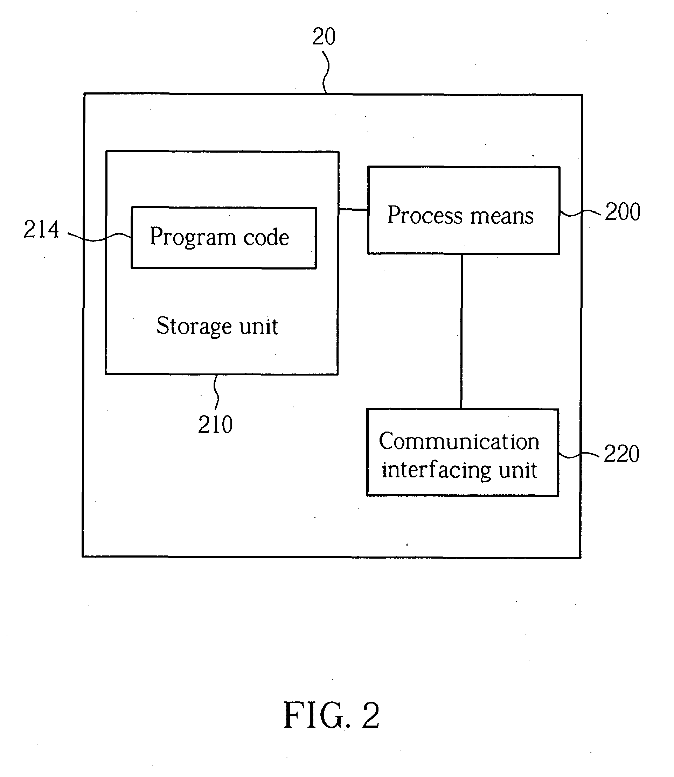

Please refer to Fig. 2, which is a schematic diagram of a communication device 20 according to an example of the present disclosure. The communication device 20 can be the client or the server shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver and can exchange signals with the server according to processing results of the processor 200.

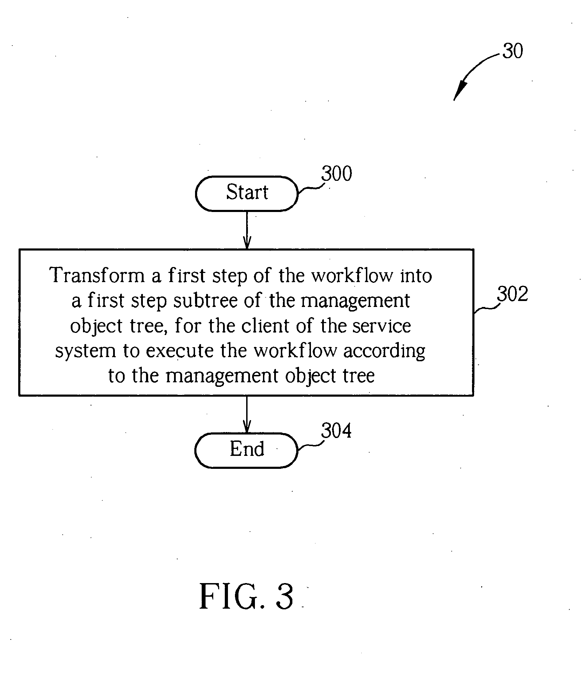

Please refer to Fig. 3, which is a flowchart of a process 30 according to an example of the present disclosure. The process 30 is utilized to transform a workflow into a management object tree for the server and a client of the service system 10 shown in Fig. 1 such that the client can execute the workflow according to the management object tree received from the server. The process 30 may be compiled into the program code 214 and includes the following steps:

Step 300: Start.

Step 302: Transform a first step of the workflow into a first step subtree of the management object tree, for the client to execute the workflow according to the management object tree.

Step 304: End.

According to the process 30, the server transforms the first step of the workflow into the first step subtree of the management object tree, and the process 30 continues to transform each step of the workflow into a corresponding step subtree of the management object tree until the management object tree is equivalent to the workflow. Then, the server transmits the management object tree to the client such that the client can execute the workflow according to the management object tree. Therefore, the client can execute required steps included in the workflow without need of an indication for each step. In other words, it is not necessary to feed back a report of an executed step to the server, and wait for an indication from the server to indicate a next step. Not only resources for feeding back reports and transmitting indications are saved, but delays for feeding back the reports and transmitting the indications are avoided.

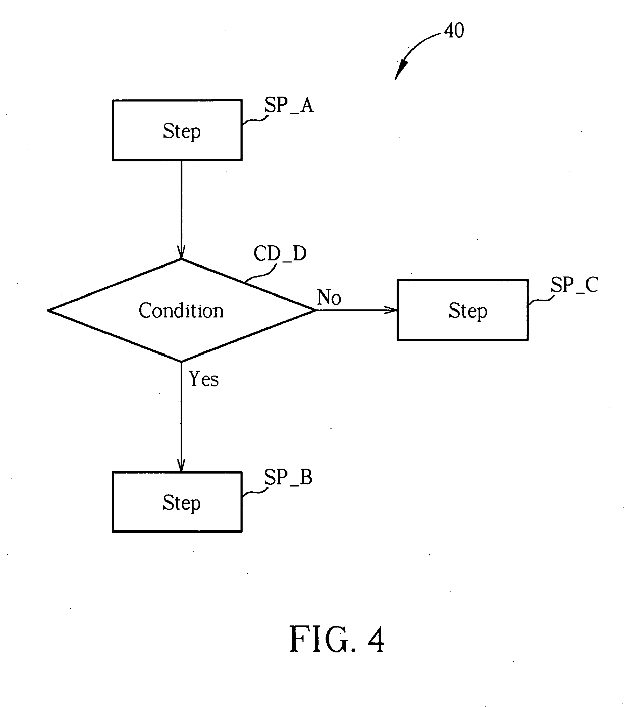

For example, please refer to Fig. 4, which is a schematic diagram of a workflow 40 according to the present invention. According to the workflow 40, after the client executes the step S_A, the client produces a corresponding result, or transfers to a corresponding state. Then, the client determines whether the result or the state satisfies the condition CD_D. If the result or the state satisfies the condition CD_D, the client continues to execute the step S_B; otherwise, the client executes the step S_C. Please note that, only four steps and one condition are used in the workflow 40 for illustrating the present invention. In practice, more steps and more conditions may be included in the workflow 40, and the client may need to check multiple conditions after executing a step, and are not limited herein. For example, the client may need to check both the result and the state after executing the step S_A.

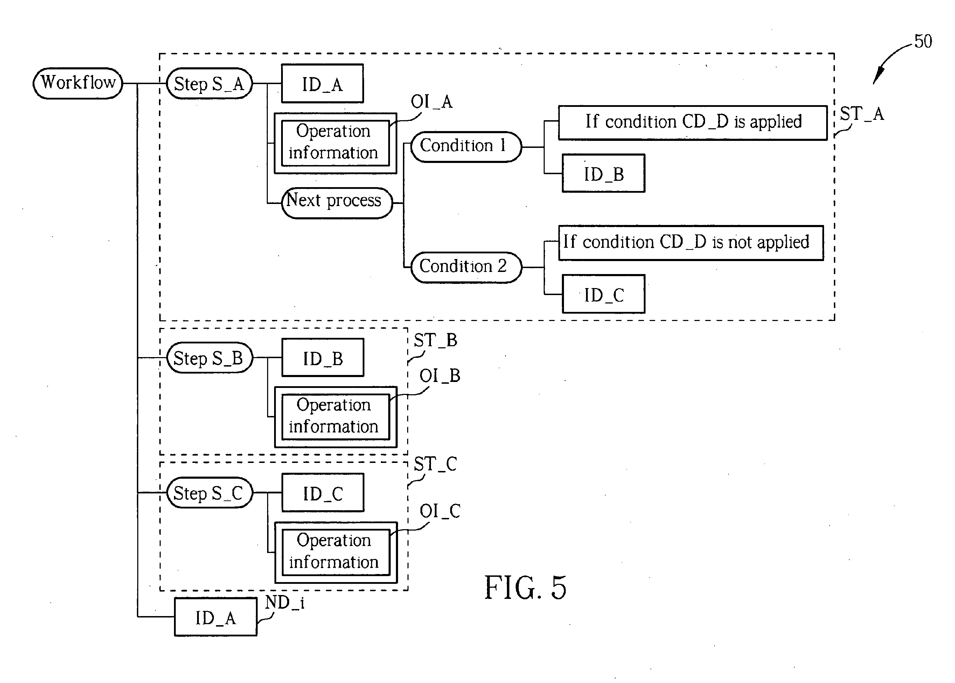

According to the process 30, the workflow 40 is transformed into the management object tree 50 shown in Fig. 5. In detail, the steps S_A, S_B and S_C are transformed into the step subtrees ST_A, ST_B and ST_C, respectively. Further, each of the subtrees comprises two nodes: a first node and a second node. The first nodes of the subtrees ST_A, ST_B and ST_C store the unique IDs ID_A, ID_B and ID_C of the steps S_A, S_B and S_C, respectively. The unique IDs are used for identifying the respective subtrees. The second nodes of the subtrees ST_A, ST_B and ST_C store the operation information OI_A, OI_B and OI_C of the steps S_A, S_B and S_C, respectively. The operation information contains information to be executed by the client, and may be an URL path pointing to a management object or one or more text describing operations, and is not limited herein.

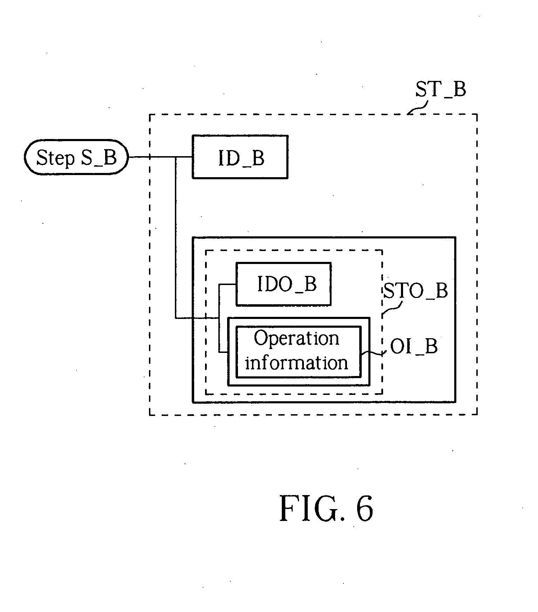

Further, a second node may map to an operation subtree which includes a first operation node storing a unique ID of the operation information and a second operation node storing the operation information. For example, please refer to Fig. 6, which is a schematic diagram of an operation subtree of the step subtree ST_B according to the present invention. In Fig. 6, the second node of the subtree ST_B maps to the operation subtree STO_B which further includes a first operation node and a second operation node. The first operation node includes the unique ID IDO_B of the operation information OI_B, and the second operation node includes the operation information OI_B.

Besides, since the client needs to know which step to execute first after receiving the management object tree 50, the node ND_i which includes the unique ID ID_A is created in the management object tree 50. Before the client starts to execute the workflow 40 according the management object tree 50, the client checks the node ND_i first which indicates the initial step (e.g. the step S_A) to be execute.

On the other hand, the subtree ST_A further includes third nodes and fourth nodes since there are subsequent steps after the client executes the step S_A, wherein each third node is paired with a fourth node. In detail, the third nodes of the subtree ST_A include unique IDs of steps to be executed after executing the step S_A. The fourth nodes of the subtree ST_A include conditions corresponding to the condition CD_D. The client determines a next step by checking the conditions first. Therefore, after executing the step S_A, the client checks whether a condition included in a fourth node is satisfied. If the condition is satisfied, the client locates and executes the next step according to the unique ID included in the corresponding third node. Please note that, the condition included in a fourth node is used by the client to determine the next step, and types and amounts of conditions included in the fourth node are not limited herein. For example, a fourth node may include multiple conditions, and the client locates and executes a next step according to the unique ID included in the corresponding third node only if all conditions of the fourth node are satisfied.

Therefore, according to the process 30 and the above illustration, a workflow is transformed into a management object tree properly and efficiently such that the client can execute the workflow correctly after receiving the management object tree from the server.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, a method of transforming a workflow into a management object tree for a service system and related communication device is disclosed. When executing the workflow according to the management object tree, the client does not requests an indication from a server for a next step but just feeds back a final result to the server after the workflow is completed or an error occurs. Therefore, not only resources for requesting and transmitting indications are saved, but delays for requesting and transmitting the indications are avoided.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of transforming a workflow for device management (DM) into a management object tree for a server and a client of a service system, the method comprising:
transforming a first step of the workflow into a first step subtree of the management object tree, for the client to execute the workflow according to the management object tree.

2. The method of claim 1, wherein the first step subtree comprises a first node storing a unique ID of the first step and a second node storing operation information related to the first step.

3. The method of claim 2, wherein the client executes the first step according to the operation information comprised in the first step subtree.

4. The method of claim 2, wherein the second node maps to an operation subtree, and the operation subtree comprises a first operation node storing a unique ID of the operation information and a second operation node storing the operation information.

5. The method of claim 2 further comprising:
transforming a second step of the workflow into a second step subtree of the management object tree, if the client is required to execute the second step after executing the first step;
wherein the second step subtree comprises a first node storing a unique ID of the second step, and a second node storing operation information related to the second step.

6. The method of claim 5, wherein the first step subtree further comprises a third node storing the unique ID of the second step and a fourth node storing condition information corresponding to the first step.

7. The method of claim 6, wherein the client locates and executes the second step according to the unique ID of the second step, if the condition information is applied.

8. The method of claim 7, wherein the condition information is applied, if the client determines that at least one condition comprised in the condition information satisfied after executing the first step.

9. The method of claim 6, wherein the client executes the second step by executing the operation information comprised in the second step subtree.

10. The method of claim 1 further comprising:
creating a node in the management object tree for indicating the client the initial step to be executed;
wherein the client checks the node first before starting to execute the workflow.

11. The method of claim 1 further comprising:
transmitting the management object tree to the client of the service system, for the client to execute the workflow according to the management object tree.

12. The method of claim 1, wherein the server and the client conform to the Software and Application Control Management Object (SACMO) developed by the Open Mobile Alliance (OMA).
